# FASCICULE DE BREVET EUROPEEN

(11) **EP 3 682 566 B1**
(45) Date de publication et mention de la délivrance du brevet: **08.06.2022**
(21) Numéro de dépôt: 18762894.6
(22) Date de dépôt: 12.09.2018
(51) Int. Cl.: H04J 14/02, H04L 12/40

(54) **PROCÉDÉ DE GESTION DE DONNÉES DANS UNE CABINE DE TRANSPORT ET ARCHITECTURE STANDARDISÉE DE MISE EN OEUVRE**
VERFAHREN ZUR DATENVERWALTUNG IN EINER TRANSPORTKABINE UND STANDARDISIERTE IMPLEMENTIERUNGSARCHITEKTUR
METHOD FOR MANAGING DATA IN A TRANSPORTATION CABIN AND STANDARDISED IMPLEMENTATION ARCHITECTURE

(30) Priorité: 13.09.2017 FR 1758477
(43) Date de publication de la demande: 22.07.2020
(73) Titulaire: Latelec, 31670 Labege Occitanie (FR)
(72) Inventeur: DELAME, Cyrille, 31460 Toutens Occitanie (FR); BERENGER, Serge, 75009 Paris Ile de France (FR); REBIÈRE, Yoann, 31500 Ramonville Occitanie (FR)
(74) Mandataire: Junca, Eric
(86) Numéro de dépôt international: PCT/EP2018/074637
(87) Numéro de publication internationale: WO 2019/053075

(56) Documents cités:
- WO-A1-2009/060153
- WO-A1-2009/100352
- WO-A1-2017/129255
- US-A- 5 898 801
- GOLMIE N ET AL: "A differentiated optical services model for WDM networks", IEEE COMMUNICATIONS MAGAZINE, IEEE SERVICE CENTER, PISCATAWAY, US, vol. 38, no. 2, 1 février 2000 (2000-02-01), pages 68-73, XP011397292, ISSN: 0163-6804, DOI: 10.1109/35.819898
- JUKAN A ET AL: "Resource allocation strategies with QoS-routing in optical networks", COMMUNICATIONS, 1999. ICC '99. 1999 IEEE INTERNATIONAL CONFERENCE ON VANCOUVER, BC, CANADA 6-10 JUNE 1999, PISCATAWAY, NJ, USA,IEEE, US, 6 juin 1999 (1999-06-06), pages 2048-2054, XP010333545, DOI: 10.1109/ICC.1999.765619 ISBN: 978-0-7803-5284-1

## Description

### DOMAINE TECHNIQUE

L'invention se rapporte à un procédé de gestion de données dans une cabine de transport de passagers, en particulier dans une cabine passagers d'un aéronef, ainsi qu'à une structure de gestion de données intégrant une architecture standardisée à réseau optique apte à mettre en œuvre ce procédé.

L'architecture est dite « standardisée » car elle permet d'augmenter la modularité de la cabine, ou d'autres structures de transport, ce qui facilite sa reconfiguration dans les réinstallations successives de cabine (« refittings » en terminologie anglaise), tout en conservant cette architecture qui reste alors un standard pour la transmission de données. L'invention s'applique en particulier aux cabines des avions commerciaux de transport de passagers de l'aéronautique civile et aux aéronefs équipés d'une telle architecture pour mettre en œuvre ce procédé.

Le domaine de l'invention se rapporte à la gestion de la transmission de données par un réseau à des équipements d'une cabine de passagers, aussi bien les équipements techniques de contrôle et/ou de commande des systèmes cabine critiques pour le transport (pompes du système de pressurisation d'air d'un aéronef, compresseurs des systèmes de conditionnement d'air, éclairage commun, détecteurs, actionneurs, etc.) que les équipements techniques des systèmes cabine non critiques, en particulier pour le vol dans le cas d'un transports aérien (cuisines ou « galleys » en terminologie anglaise, ventilation, éclairage individuel, etc.), ainsi que les systèmes de communication vers l'extérieur (Internet, WIFI, LIFI, etc.) pour les équipements électroniques personnels ou PED (acronyme de « Personal Electronic Device en terminologie anglaise), les systèmes audiovisuels (systèmes de transmission d'images et/ou de sons pour les passagers, provenant par exemple de l'environnement extérieur à partir de caméras ou à partir d'enregistrements, en particulier le système de divertissement IFE pour les avions acronyme de « In Flight Entertainement » en terminologie anglaise, etc.), ou des équipements techniques de la cabine.

L'invention s'applique en particulier aux cabines passagers des aéronefs mais également aux réseaux de données embarqués dans tout type de véhicule de transport, aussi bien les véhicules automobiles, le transport maritime, le transport ferroviaire ou équivalent.

### ÉTAT DE LA TECHNIQUE

L'évolution actuelle dans le transport tend à embarquer un nombre croissant de systèmes électroniques pour la gestion des données dédiées tant aux équipements techniques du transport qu'aux équipements personnels des passagers. En particulier dans le transport aérien, le besoin des passagers à rester connecter (Internet, Vidéo à la Demande, contact téléphonique, etc.) est de plus en plus pressant. De plus, l'isolation des passagers dans l'espace contribue à augmenter ce besoin.

Cette gestion des données est aujourd'hui assurée au cas par cas, par la multiplication de liaisons directes locales entre les équipements fournisseurs de données et les systèmes d'exploitation de ces données. Cependant la multiplication des liaisons limitent la quantité d'équipements électroniques personnels pouvant être utilisés en permanence par les passagers alors que le nombre et la diversification des PED (smartphones, tablettes, caméras, ordinateurs portables, casques de réalité virtuelle, etc.) augmentent considérablement.

Une autre conséquence de la multiplication de ces liaisons est l'augmentation significative du poids et de la complexité du câblage embarqué. Cette conséquence est aggravée du fait que, les aéronefs utilisant de plus en plus de structures de base (fuselage, etc.) en matériaux composites, de lourds équipements métalliques sont nécessaires pour neutraliser les effets liés à la foudre et aux interférences électromagnétiques dites EMI (« Electro Magnetic Interference » en terminologie anglaise).

Ainsi, l'utilisation massive de câblage et les besoins croissants en débit à bord, en particulier pour les cabines passagers d'aéronefs, nécessitent la mise en place de technologies de communication performantes, légères et insensibles aux interférences de type EMI.

Des documents de l'état de la technique rendent compte de l'utilisation de fibres optiques dans une cabine d'avion afin de transmettre des données. On peut par exemple citer les documents de brevet US 20100139948, US 2005247820, US 2005258676 et US 2012141066. Cependant les solutions développées dans ces documents décrivent des moyens optimisés dédiés à l'installation de câbles électriques ou, indifféremment, de fibres optiques dans la cabine passager d'un aéronef. Aucune architecture globale de gestion et de distribution de données par voie optique n'est décrite dans ces documents.

De plus, les solutions de l'état de la technique ne prévoient pas d'architecture standardisée, capable de s'adapter aux refittings des cabines de passagers, en particulier une architecture standardisée compatible avec des normes de sécurité de plus en plus complexes, ce qui entraîne en général la conception et la réalisation de nouvelles architectures à chaque reconfiguration de cabine avec des durées de maintenance et des cycles d'immobilisation importants.

### EXPOSÉ DE L'INVENTION

L'invention vise, au contraire, à permettre une communication de données performante, légère, insensible aux interférences de type EMI et apte à s'adapter aux refittings de cabine. Pour ce faire, l'invention prévoit une distribution des données bidirectionnelle bâtie autour d'une transmission entre les fournisseurs de données et des équipements exploitant et/ou fournissant des données, via une distribution optique des données relayée jusqu'à ces équipements en fonction de priorités paramétrables.

Plus précisément, la présente invention a pour objet un procédé de gestion de données dans une cabine de passagers équipée d'une architecture standardisée de distribution de flux de données entre des ressources de données d'une partie « systèmes » comportant un système de transmission audiovisuel, des systèmes de communication vers l'extérieur de la cabine et/ou des systèmes cabine, et une partie « exploitation » de ces données constituée d'équipements de cabine destinataires via une conversion de données en signaux optiques. Ce procédé de gestion consiste à transmettre, dans un sens dit descendant, les données fournies par au moins un système de la partie systèmes à une unique interface de concentration et configuration qui aiguille les données des ressources selon l'équipement destinataire, convertit les données non optiques en signaux optiques, puis alloue des longueurs d'onde aux signaux optiques et les distribue par multiplexage et paramétrage des priorités en fonction des équipements destinataires et/ou des ressources en fonction de la ressource et des équipements pour une ressource donnée, afin de transmettre ces flux multiplexés de signaux optiques sur une voie d'au moins un réseau de distribution optique aux équipements destinataires de la partie exploitation via une interface intermédiaire qui gère les longueurs d'onde des signaux optiques et les reconvertit en signaux adaptés aux équipements le cas échéant. La transmission de données est également conduite dans le sens inverse dit montant selon un traitement inversé à chaque interface depuis des équipements de la cabine jusqu'aux ressources concernées via l'interface intermédiaire en fonction de la ressource concernée, le réseau de distribution optique puis l'interface de concentration et configuration qui transmet ces derniers à la ressource concernée.

Dans ces conditions, l'utilisation de réseau de distribution optique permet de bâtir une architecture performante, légère, simplifiée, durable et standardisée, indépendante des fonctions et protocoles entre la partie système et la partie exploitation. Elle permet en outre de s'affranchir des câblages d'interconnexion installés en grand nombre tout le long de la cabine, et donc de réaliser un gain de temps important lors des refittings, et d'améliorer la sécurité (sécurité informatique des échanges de données sur fibre, insensibilité aux interférences de type EMI, etc.).

De plus, ce procédé utilise un nombre de réseaux optiques adapté aux conditions de mise en œuvre (contraintes physiques, exigences fonctionnelles, performances et débits visés, choix de conception de cabine, etc.) en appliquant un nombre de réseaux optiques optimisé pour un nombre donné de catégories de système parmi les systèmes audiovisuels, les systèmes de communication et les systèmes cabine: un réseau pour une catégorie de systèmes, un ou deux réseaux pour deux catégories, et un, deux ou trois réseaux pour trois catégories de systèmes.

L'allocation de longueurs d'onde et la distribution des signaux optiques peut aussi être conduite en fonction du niveau classe premium ou standard (c'est-à-dire selon le niveau de service, d'équipement et de prestation) des flux optiques pour les ressources et équipements de transmission audiovisuel de type IFE, et de communication (PED, etc.), ainsi que par une discrimination entre les flux critiques ou non critiques des ressources et équipements techniques des systèmes cabine.

Selon des modes particuliers, le procédé peut prévoir que :
- l'interface intermédiaire est connectée aux équipements des systèmes cabine et/ou aux équipements des systèmes de communication;
- l'interface intermédiaire comporte au moins une interface de déconnexion couplée à des interfaces de liaison aux équipements du système audiovisuel et aux équipements des systèmes de communication vers l'extérieur situés à proximité des équipements du système audiovisuel, les interfaces de liaison assurant, dans les deux sens, la conversion optique/électrique ainsi que la gestion par allocation des longueurs d'onde et distribution des données;
- l'allocation des longueurs d'onde est effectuée en fonction du positionnement des équipements dans la cabine, des contraintes physiques de la cabine et des caractéristiques fonctionnelles de service liées à un type de flux optique se rapportant à un niveau de classe et/ou de sécurité, par exemple le niveau premium ou standard des flux optiques ou la discrimination entre les flux critiques ou non critiques des ressources et équipements techniques des systèmes cabine;

- l'architecture est reconfigurée par un traitement numérique appliqué à l'interface de concentration et configuration lors d'installation et/ou de suppression des équipements audiovisuels, de communication, et/ou de commande / contrôle technique de la cabine;
- une architecture de redondance intégrant au moins l'interface de concentration et configuration est déployée selon une configuration identique à l'interface de concentration et configuration de l'architecture standardisée, afin de s'affranchir des contraintes physiques de détérioration et de prévenir d'éventuelles pannes au sein du réseau de distribution optique; en option, l'architecture de redondance intègre également une interface intermédiaire de connexion aux équipements;
- le réseau de distribution optique peut ajouter et/ou séparer des flux optiques par multiplexage et/ou démultiplexage de longueurs d'onde au sein de ce réseau;
- la transmission de données est effectuée dans les sens descendant et montant soit sur la même voie optique soit sur deux voies optiques distinctes.

L'invention se rapporte également à une structure de gestion de données embarquée dans un moyen de transport intégrant une cabine équipée de sièges passagers, ladite structure comportant un bloc de ressources de données intégrant des unités centrales de systèmes comportant un système de transmission audiovisuel, des systèmes de communication vers l'extérieur de la cabine et/ou des systèmes cabine, une architecture standardisée de distribution de flux de données dans la cabine, et des équipements de cabine d'exploitation desdits systèmes. Dans cette structure, l'architecture standardisée comporte un boitier de concentration et configuration de transfert bidirectionnel, d'une part, de signaux de base avec le bloc de ressources de données et, d'autre part, de signaux optiques avec les équipements de la cabine sur au moins une fibre de réseau optique. Ce boitier de concentration et configuration intègre des unités de traitement par commutation des signaux de base, conversion bidirectionnelle des signaux de base en signaux optiques de transfert aux équipements, et gestion de ces signaux optiques par allocation de longueurs d'onde et distribution de flux optiques descendants et montants. Ce boitier de concentration et configuration est relié aux équipements desdits systèmes via des boitiers intermédiaires intégrant également au moins certaines des unités de traitement en fonction des équipements auxquels ils sont reliés.

Selon des modes de réalisation préférés :
- les signaux de base entre le boitier de concentration et configuration et le bloc de ressources de données sont choisis entre des signaux électriques, hertziens et optiques;
- les boitiers intermédiaires sont constitués par au moins un boitier de déconnexion intégrant des unités de conversion de signaux optiques/électriques, et/ou de commutation et/ou de gestion par allocation des longueurs d'onde en fonction des équipements de systèmes de communication et/ou des systèmes cabine en liaison;
- chaque boitier de déconnexion est relié aux équipements des systèmes de transmission audiovisuelle et à des équipements des systèmes de communication à proximité des sièges passagers via des boitiers d'interface munis d'unités de conversion optique/électrique et de gestion d'allocation des longueurs d'onde;
- les signaux de base étant des signaux électriques, les boitiers intermédiaires sont constitués de boitiers d'interface intégrant des unités de conversion électrique/optique et de gestion par allocation des longueurs d'onde, chaque boitier d'interface étant relié à des équipements des systèmes de transmission audiovisuel et des systèmes de communication à proximité des sièges passagers;
- les sièges sont raccordés au boitier d'interface correspondant par des émetteurs / récepteurs de signaux;
- les boitiers d'interface sont reliés entre eux et à un boitier de déconnexion selon une configuration choisie entre une configuration en chaîne, en bus, en anneau et en étoile, en fonction des contraintes physiques, des exigences fonctionnelles et des choix de conception;
- la distribution des signaux par le boitier de déconnexion aux boitiers d'interface est réalisée par une technique choisie entre des recopies par transfert successif dans le cas d'une configuration en chaîne et des transmissions sélectives par des séparateurs optiques dans le cas d'une configuration en étoile;
- chaque boitier d'interface transmet des signaux électriques à plusieurs sièges passagers et comporte une unité de conversion des signaux descendants aux équipements en signaux électriques et des signaux montants des équipements en signaux optiques, et une unité de gestion par allocation des longueurs d'onde intégrant un multiplexeur OADM d'injection et de récupération de signaux optiques respectivement dans et depuis au moins une fibre otique;
- l'unité de gestion par allocation des longueurs d'onde de chaque boitier d'interface intègre un multiplexeur OADM d'injection et d'extraction de signaux optiques reconfigurable dit ROADM;
- les allocations de longueurs d'onde peuvent être paramétrés selon une répartition pouvant être choisie par type de système, par association à chaque boitier de déconnexion, par association aux boitiers d'interface reliés à un même boitier de déconnexion, par emplacement des équipements en fonction de leur classe, et/ou par type de flux descendant et montant entre les boitiers d'interface et le boitier de concentration et configuration;
- l'attribution des allocations de longueurs d'onde est identique dans les sens montant et descendant des flux de données entre les boitiers d'interface et le boitier de concentration et configuration;
- les boitiers intermédiaires sont constitués par au moins un boitier de déconnexion intégrant des unités de commutation et de gestion d'allocation des longueurs d'onde en fonction des équipements des systèmes audiovisuels, de communication et/ou des systèmes cabine en liaison, chaque boitier de déconnexion étant couplé directement aux équipements de systèmes cabine et à des équipements de systèmes de communication situés dans la cabine, et couplé aux équipements des systèmes de transmission audiovisuel et à des équipements des systèmes de communication à proximité des sièges passagers via des boitiers d'interface munis d'unités de conversion optique/électrique et de gestion par allocation des longueurs d'onde;
- dans le cas où l'allocation des longueurs d'onde est indépendante des boitiers d'interface, des moyens de contrôle d'accès à ces boitiers sont prévus et choisis parmi un multiplexage en temps partagé ou TDM, un passage de jeton et un échantillonnage synchrone de type polling, afin d'éviter les risques d'interférence;
- chaque unité de commutation comporte des contacteurs d'aiguillage (« switchs » en terminologie anglaise) des données des ressources activés par le boitier de concentration et configuration en fonction des équipements destinataires;
- chaque unité de commutation intègre des moyens de gestion des priorités;
- chaque unité de conversion électrique / optique intègre des émetteurs-récepteurs électro-optiques (« transceivers » en terminologie anglaise), ces transceivers pouvant être couplés à des adaptateurs spécifiques de données en fonction des ressources;
- chaque unité de gestion par allocation des longueurs d'onde et distribution des flux optiques descendants et montants comporte un réseau d'attribution par multiplexage choisi entre un multiplexeur de division de longueur d'onde (ou WDM acronyme de « wavelength division multiplexer »), un multiplexeur de division dense (ou DWDM acronyme de « dense wavelength division multiplexer »), un multiplexeur de division brut (ou CWDM « acronyme de « coarse wavelength division multiplexer ») et un multiplexeur de division ultra-dense (ou UDWDM acronyme de « ultra-dense wavelength division multiplexer »);
- chaque unité de gestion par allocation des longueurs d'onde et distribution des flux optiques montants et descendants intègre également des moyens de gestion spécifique des signaux optiques couplés au multiplexeur de division de longueur d'onde et choisis parmi un multiplexeur terminal de longueurs d'onde des signaux optiques ou OTM, un démultiplexeur de longueur d'onde optique des signaux issus du réseau optique ou OWD, un multiplexeur d'injection de signaux optiques à une longueur d'onde et d'extraction de signaux optiques sur des longueurs d'onde de réception d'équipement correspondant ou OADM, et/ou un connecteur de longueurs d'onde optique à des ports spécifiques ou OXC (OTM, OWD, OADM et OXC étant respectivement des acronymes de « optical terminal multiplexer », « optical wavelength demultiplexer », « optical add and drop multiplexer » et « optical cross connect » en terminologie anglaise);
- les flux optiques descendants et montants sont soit portées conjointement sur au moins une fibre optique soit séparés sur au moins deux fibres optiques, pour des raisons de redondance, de déploiement supplémentaire, de débit ou de performance, les fibres optiques pouvant être monomodes et/ou multi-modes;
- la structure de transport est un aéronef et les ressources de données sont situées dans l'aéronef à proximité de la cabine passagers, en particulier dans une baie avionique.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, un schéma-blocs d'un exemple de structure de gestion de données embarquée dans une cabine de passagers d'un aéronef pour des équipements d'un système IFE, de systèmes de communication et de systèmes cabine;
- la figure 2, un schéma-blocs reprenant l'exemple de structure de la figure 1 et dédié aux équipements d'un système IFE et à des systèmes de communication ;
- la figure 3, une variante du schéma-blocs de la figure 2 avec séparation des flux optiques descendants et montants sur deux fibres optiques;
- la figure 4, une variante du schéma-blocs de la figure 2 sans boitier de déconnexion, permet une adaptation en fonction des besoins de chaque siège en débit et bande passante;
- la figure 5, une variante du schéma-blocs de la figure 4 avec séparation des flux montants et descendants sur deux fibres optiques, et
- la figure 6, une variante du schéma-blocs de la figure 1 sans boitier d'interface et dédiée aux équipements techniques des systèmes cabine.

Dans la description ci-dessous, des signes de référence identiques se rapportent à un même élément ou un élément semblable ayant la même fonction et renvoient au(x) passage(s) du texte qui le(s) décrive(nt).

### DESCRIPTION DETAILLEE DE MODES DE REALISATION

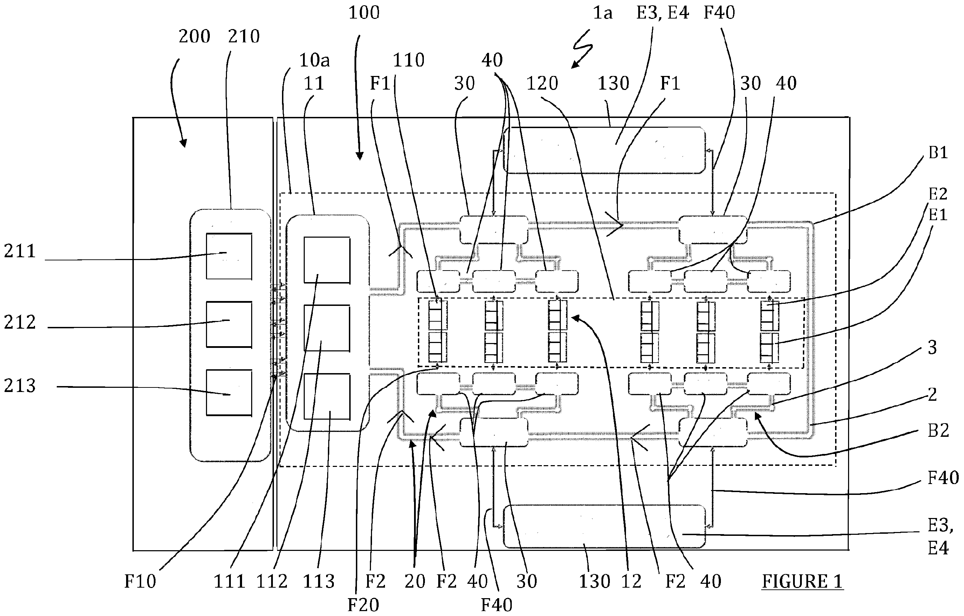

Le schéma-blocs de la figure 1 illustre un exemple de structure de gestion de données 1a embarquée dans un aéronef intégrant une cabine de passagers 100, équipée de sièges 110 dans la zone passagers 120, et une baie avionique 200. La structure 1a comporte un bloc de ressources de données 210 dans la baie avionique 200 intégrant trois unités centrales 211 à 213: une unité centrale 211 d'un système de transmission IFE, une unité centrale 212 de systèmes de communication (Internet et WIFI dans l'exemple) entre la cabine 100 et l'extérieur de la cabine, et une unité centrale 213 des systèmes cabine en liaison avec les équipements techniques critiques ou non critiques pour le vol.

La structure 1a comporte également une architecture standardisée 10a de distribution de flux descendants F1 et de flux montants de données dans et à partir des équipements de la cabine 100. Les flux descendants F1 permettent d'exploiter les données provenant desdites unités centrales 211 à 213 et les flux montants F2 de transférer des données auxdites unités centrales 211 à 213 à partir des équipements. Ces équipements sont répartis dans la cabine 100: les terminaux E1 du système IFE intégrés aux sièges 110 de la zone passagers 120, les équipements PED E2 des passagers positionnés à proximité de ces sièges 110 - les communications des terminaux E1 et des PED E2 étant gérés respectivement par les unités centrales 211 et 212 -; et, en dehors de la zone passagers 120, dans les emplacements 130 dans cet exemple de réalisation, les équipements techniques critiques et non critiques E3 (actionneurs de pompes, détecteurs de température ou de pression, unités de décodage/encodage, appareils de cuisson des galleys, etc.) des systèmes cabine gérés par l'unité centrale 213, ainsi que des équipements E4 de systèmes de communication situés dans la cabine 100 gérés par l'unité centrale des systèmes de communication 212.

La distribution de flux descendants F1 de données est générée par un boitier de concentration et configuration 11 de l'architecture standardisée 10a. Selon des transferts bidirectionnels, ledit boitier 11 communique, d'une part, des signaux électriques avec les unités centrales 211 à 213 du bloc de ressources 210 (doubles flèches F10) et, d'autre part, des signaux optiques avec les équipements de la cabine 100 via une fibre optique 2 formant une boucle primaire B1 d'un réseau optique 20 sur le boitier de concentration et configuration 11. Le réseau optique 20 est intégré, selon différents modes de réalisation, au plafond et/ou au plancher de la cabine 100.

Un tel boitier de concentration et configuration 11 intègre des unités de traitement des signaux 111 à 113: une unité de commutation 111 pour aiguiller les signaux électriques générés par le bloc de ressources 210 en fonction des équipements E1 à E4, une unité de conversion bidirectionnelle 112 des signaux électriques commutés 210 en signaux optiques, et une unité de gestion 113 des signaux optiques par des paramètres d'allocation en longueurs d'onde et de distribution en flux optiques descendants F1 et montants F2 dans le réseau 20.

La commutation est avantageusement réglée par des switchs (non représentés) activés par le boitier de concentration et configuration 11 qui gère également les switchs de toutes les unités de commutation 111 décrites ci-après. Ces switchs permettent un aiguillage optimal des signaux par des réseaux de multiplexage (comme précisé ci-après) en fonction de leur destination caractérisée par une adresse physique ou, dans des variantes, par une adresse logique ou un numéro de port.

Le boitier de concentration et configuration 11 est relié aux équipements E1 à E4 des systèmes IFE, des systèmes de communication et des systèmes cabine via des boitiers intermédiaires montés en série, les boitiers de déconnexion 30 du réseau optique 20 dans l'exemple illustré. Le réseau optique 20 comporte des boucles secondaires en chaîne B2 à fibre optique unique 3 couplées à la boucle primaire 20 à travers les boitiers de déconnexion 30. Sur ces boucles secondaires B2, les boitiers d'interface de connexion 40 sont couplées (doubles flèches F20) aux équipements E1 et E2 de la zone de cabine 120.

Les boitiers de déconnexion 30 sont ainsi couplés électriquement aux équipements E3, E4 des emplacements de cabine 130 via des câblages électriques (doubles flèches F40), et aux équipements E1, E2 de la zone passagers 120 via les boitiers d'interface 40.

Chaque boitier de déconnexion 30 est alors relié à plusieurs - trois dans l'exemple - boitiers d'interface 40 montées en série bouclée (« daisy chain » en terminologie anglaise) sur le boitier de déconnexion 30, et chaque boitier d'interface 40 est couplé électriquement à une rangée de sièges 12 ou, en variante de réalisation, à plusieurs rangées. Alternativement, en fonction des contraintes d'encombrement, des exigences fonctionnelles ou de choix de conception, les boitiers d'interface 40 peuvent être connectés en bus, en anneau ou en étoile. La distribution des signaux par le boitier de déconnexion 30 aux boitiers d'interface 40 est réalisée par des recopies par transfert successif dans le cas d'une configuration en chaîne ou des transmissions sélectives par des séparateurs optiques dans le cas d'une configuration en étoile.

Chacun de ces boitiers de déconnexion 30 intègre une unité de commutation 111 des signaux électriques générés par les équipements E3 et E4, une unité de conversion bidirectionnelle 112 des signaux électriques commutés en signaux optiques et une unité de gestion 113 des signaux optiques par allocation en longueurs d'onde et distribution en flux optiques dans le réseau 20.

De plus, dans cet exemple de réalisation, chaque boitier d'interface 40 intègre également une unité de conversion bidirectionnelle 112 des signaux électriques en signaux optiques, et une unité de gestion 113 des signaux optiques par allocation de longueurs d'onde et distribution de flux optiques dans le réseau 20. Dans le cas où l'allocation des longueurs d'onde est attribuée indépendamment des boitiers d'interface 40, plusieurs boitiers d'interface 40 peuvent émettre ou recevoir des signaux sur une même longueur d'onde. Pour éviter de tels risques d'interférence, des moyens de contrôle d'accès à ces interfaces 40 sont avantageusement déployés. De tels moyens de contrôle d'accès sont choisis parmi un multiplexage en temps partagé ou TDM, un passage de jeton et un échantillonnage synchrone de type polling.

Avantageusement, chaque unité de commutation 111 intègre un protocole de gestion des priorités en fonction des différents équipements E1 à E4, par exemple en priorisant les signaux à transmettre aux équipements techniques E3, puis aux équipements des systèmes de communication E4 et E2, et enfin aux équipements E1 du système IFE. Par ailleurs, chaque unité de conversion bidirectionnelle électrique / optique 112 intègre avantageusement des émetteurs-récepteurs électro-optiques (« transceivers » en terminologie anglaise) couplés à des adaptateurs spécifiques de données en fonction du type de système de données du bloc de ressources 210, à savoir dans le présent exemple le système IFE, les systèmes de communication et les systèmes cabine.

Concernant les allocations de longueurs d'onde, chaque unité de gestion 113 par allocation des longueurs d'onde et distribution des flux optiques descendants F1 dans le sens « boitier de concentration et configuration 11 vers les équipements E1 à E4 et montants F2, dans le sens inverse, comporte un multiplexeur de division de longueur d'onde dit WDM. Alternativement, en fonction des exigences de performance, de débit, d'adressage et de contraintes physiques, un multiplexeur de division dense dit DWDM, un multiplexeur de division brut dit CWDM ou un multiplexeur de division ultra-dense dit UDWDM peuvent être avantageusement utilisés.

Avantageusement, chaque unité de gestion 113 intègre également un multiplexeur de gestion spécifique des signaux optiques couplé au multiplexeur de division de longueur d'onde, un multiplexeur terminal de longueurs d'onde des signaux optiques dit OTM dans l'exemple de réalisation. Alternativement ou en combinaison, un démultiplexeur de longueur d'onde optique des signaux issus du réseau optique 20 dit OWD, un multiplexeur d'injection de signaux optiques à une longueur d'onde particulière et d'extraction de signaux optiques sur des longueurs d'onde de réception d'équipement correspondant dit OADM, et/ou un connecteur de longueurs d'onde optique à des ports spécifiques dit OXC peuvent être intégrés.

La répartition des longueurs d'onde est avantageusement paramétrée par type de service fourni selon les systèmes (système IFE, systèmes de communication et systèmes cabine). A des fins de simplification, l'attribution des longueurs d'onde est identique dans cet exemple, dans les sens montant F1 et descendant F2 des flux de communication entre les boitiers d'interface 40 et le boitier de conversion et configuration 11 mais, pour bien différencier les sens montant et descendant, la stratégie d'allocations peut être différente dans ces deux sens selon des variantes de réalisation. Dans l'exemple, des longueurs d'onde dans la bande 1270 - 1370 nm sont allouées tous les 20 nm.

Alternativement, les paramètres d'allocation peuvent être choisis en fonction des boitiers de déconnexion 30, des boitiers d'interface 40 reliés à un même boitier de déconnexion 30, par emplacement des équipements E1 à E4 en fonction de leur classe premium ou standard, et/ou par type de flux descendant F1 et montant F2 entre les boitiers d'interface 40 reliés à un même boitier de déconnexion 30 et le boitier de conversion et configuration 11.

L'architecture 10a prend avantageusement en compte la nature critique ou non critique des données transportées sur le réseau optique 20 entre le boitier de concentration et configuration 11 et les équipements techniques E3. Pour ce faire, les signaux critiques, destinés aux équipements techniques E3 critiques pour les conditions de vol, sont portés par le protocole avionique en duplex intégral dit AFDX, alors que les données non critiques destinées aux équipements techniques E3 non critiques sont traitées par le protocole Ethernet.

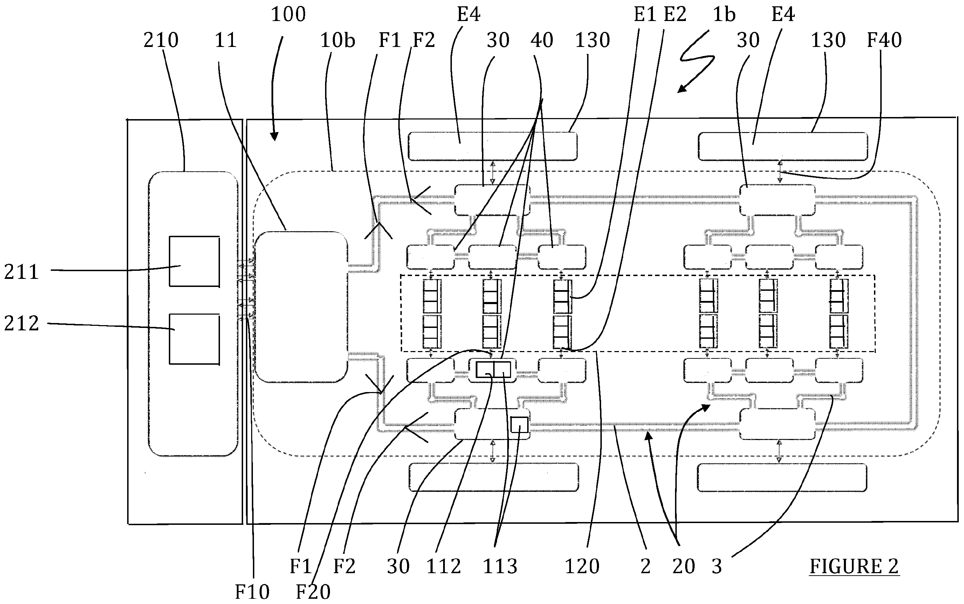

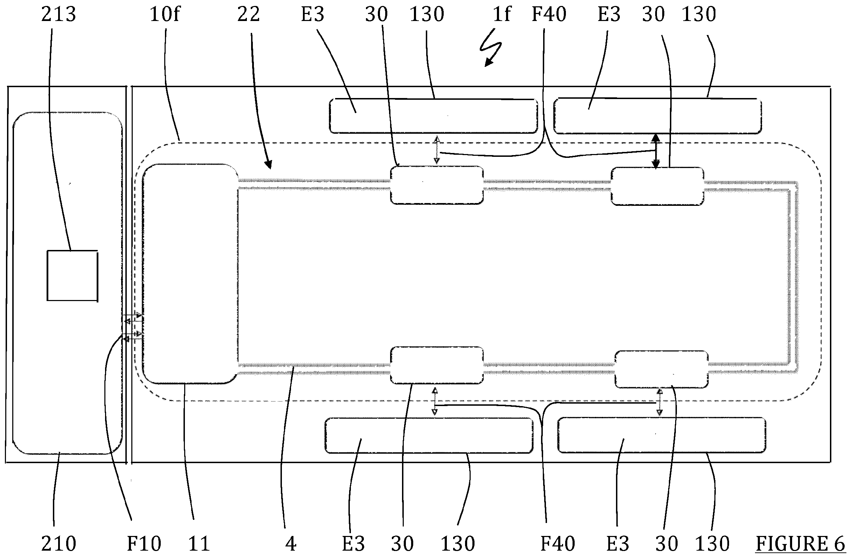

Le schéma-blocs de la figure 2 illustre une structure de gestion de données simplifiée 1b qui reprend la structure 1a précédente sans les équipements E3 des systèmes cabine qui sont gérés par un autre réseau de distribution, par exemple par le plafond (cf. figure 6). La structure 1b gère alors les équipements E1 du système IFE et les équipements PED E2 de la zone passagers 120, ainsi que les équipements E4 des systèmes de communication dans les emplacements de cabine 130. Dans ce cas, les données issues des deux unités centrales 211 et 212 du bloc de ressources 210, respectivement du système IFE et des systèmes de communication, n'utilisent qu'un même réseau de distribution 20, par le plancher de la cabine 100 dans l'exemple de réalisation.

Cette structure de gestion simplifiée 1b intègre une architecture 10b qui reprend l'architecture standardisée 10a dans laquelle les boitiers de déconnexion 30 sont dépourvus d'unité de conversion des signaux car toutes les conversions sont effectuées par les boitiers d'interface 40 dans cet exemple. Alternativement, si les boitiers de déconnexion 30 sont équipés d'unités de conversion 112, comme dans la structure de gestion 1a (cf. figure 1), ces unités de conversion ne sont pas intégrées ou sont rendues inactives. Chaque boitier de déconnexion 30 intègre une unité de gestion 113 équipée d'un multiplexeur OADM, ou ROADM pour augmenter l'adaptabilité des systèmes de communication au réaménagement de cabine (refittings).

Les boitiers d'interface 40 reprennent la même configuration: une unité de conversion bidirectionnelle optique/électrique 112 et une unité de gestion 113 équipée d'un multiplexeur OADM. En variante, dans le cas où chaque boitier d'interface 40 fonctionne sur une longueur d'onde qui lui est propre, les données strictement adressées à ses sièges sont récupérées par un multiplexeur ROADM à fonctions injection ou DROP et addition ou ADD: il peut récupérer les données qui sont strictement adressées à ses sièges en faisant un DROP du signal associé à sa longueur d'onde de réception. Il peut aussi transmettre les signaux envoyés par ses sièges dans la fibre en effectuant la fonction ADD du signal associé à sa longueur d'onde d'émission. Suivant les choix de conception, les longueurs d'onde d'émission et de réception peuvent être différentes.

Par ailleurs, dans l'architecture standardisée 10a, chaque fibre 2 ou 3 du réseau optique 20 porte l'ensemble des flux de données descendants F1 et montants F2.

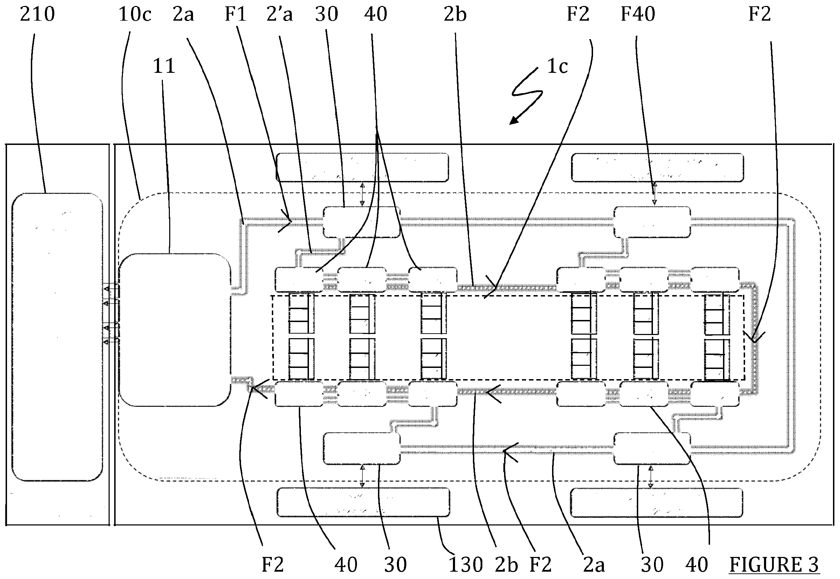

Dans l'architecture 10c du schéma-bloc de la figure 3, qui illustre une variante de réalisation 1c de la structure de gestion de données simplifiée 1b, les flux de données descendants F1 et montants F2 sont séparés. Dans cette architecture 10c, une fibre de flux descendants 2a, dédiée au transport des flux de données descendants F1, relie le boitier de concentration et configuration 11 aux boitiers de déconnexion 30 et aux boitiers d'interface 40, via des prolongements 2'a de fibre par dérivation, et une fibre de flux montant 2b, dédiée au transport des flux de données montants F2, relie les boitiers d'interface 40 au boitier de concentration et configuration 11.

En variantes, plusieurs fibres de flux descendants et/ou plusieurs fibres de flux montants peuvent être utilisées en fonction des exigences de performance, d'adressage ou de contraintes physiques.

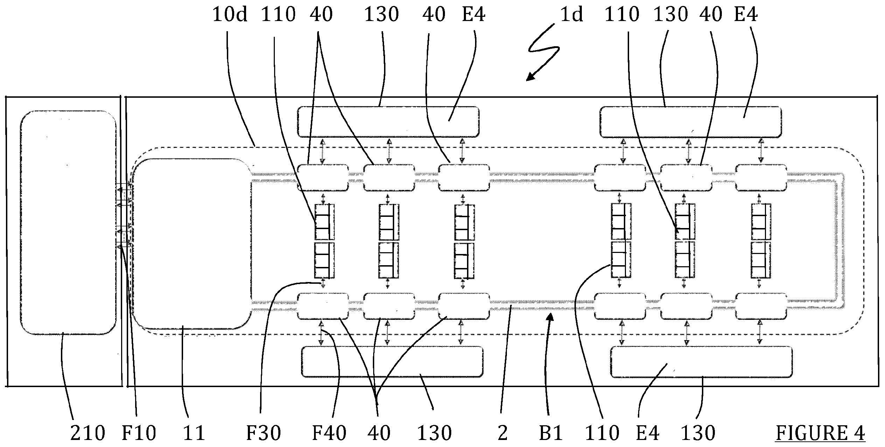

Dans l'architecture 10d de la structure de gestion 1d du schéma-blocs de la figure 4, qui reprend la structure de gestion des données simplifiée 1b de la figure 2, les boitiers de déconnexion 30 sont supprimés afin de s'adapter directement aux besoins de chaque siège 110 en débit et bande passante. Dans cette architecture 10d, les boitiers d'interface 40 sont directement connectées au boitier de concentration et configuration 11 via la fibre optique 2 formant la boucle de réseau B1. Les équipements de communication E4 sont alors couplés par câblage aux boitiers d'interface 40.

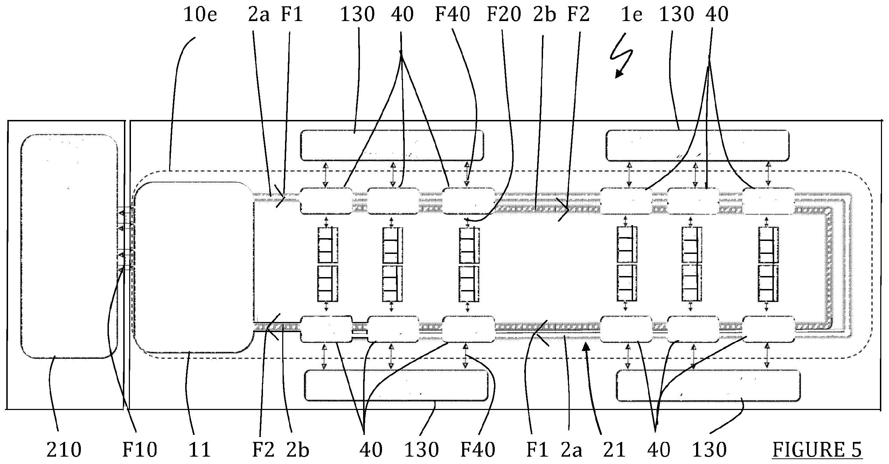

Comme illustré par l'architecture 10e de la structure de gestion 1e de la figure 5 il est également possible de séparer les flux de données descendants F1 et montants F2 à partir de l'architecture 10d. Dans cette architecture 10e, une fibre de flux descendants 2a, dédiée au transport des flux de données descendants F1, relie en série le boitier de concentration et configuration 11 aux boitiers d'interface 40 successives, et une fibre de flux montants 2b, dédiée au transport des flux de données montants F2, relie en série et successivement les boitiers d'interface 40 au boitier de concentration et configuration 11. Les fibres 2a et 2b forment un réseau optique 21 à flux descendants F1 et montants F2 séparés.

Une architecture 10f dédiée aux équipements techniques E3 des systèmes cabine (emplacements 130) est illustrée par le schéma-blocs de la structure de gestion 1f de la figure 6, en liaison (doubles flèches F40) avec le boitier de concentration et configuration 11 de la structure de gestion 1a (cf. figure 1). Dans cette architecture 10f, la distribution des données issues de l'unité centrale des systèmes cabine 213 s'effectue via une fibre 4 formant un réseau optique en boucle 22 par le plafond de la cabine. La fibre 4 relie les boitiers de déconnexion 30 montés en série et les équipements E3 sont couplés à ces boitiers 30 par des moyens émetteurs / récepteurs. Les deux principales familles de données traitées sont les données critiques et les données non critiques des équipements techniques E3 respectivement critiques (des actionneurs, détecteurs, unités de décodage/encodage, unités de lumière, affichage, annonces, etc.) et non critiques (galleys, lumières, ventilation, etc.).

En variante, il est possible de déployer plusieurs fibres 4 en parallèle et le nombre total de fibres dépend principalement de la capacité d'adressage - par exemple selon un multiplexage de division de longueur d'onde ou WDM du boitier de concentration et configuration 11 - et du débit maximal proposé. Les données critiques sont par exemple supportées par le protocole AFDX et les données non critiques par Ethernet aiguillés par des contacteurs AFDX et Ethernet dudit boitier 11. Le protocole de bus CAN est également utilisé, par exemple pour les détecteurs, par le boitier 11 au niveau de l'unité de conversion optique / électrique 112 (cf. figure 1).

La gestion des longueurs d'onde et distribution des flux est traitée comme dans le cadre de l'architecture 10a, par exemple par combinaison des multiplexeurs OTM, OWD, OADM et/ou ROADM.

Avec la gestion de données critiques, une architecture de distribution redondante à plusieurs fibres 4 est déployée afin d'assurer le transfert d'informations en cas de panne de réseau.

L'invention n'est pas limitée aux exemples décrits et représentés. Les architectures sont reconfigurables par une mise à jour numérique appliquée au boitier de concentration et configuration et aux boitiers de déconnexion.

Des architectures redondantes peuvent être déployées selon une configuration identique à l'architecture de distribution initiale, afin de s'affranchir des contraintes physiques de détérioration et de prévenir d'éventuelles pannes au sein du réseau de distribution optique. En particulier, dans le cas où des équipements critiques des systèmes cabine sont exploitées par ces architectures, une architecture redondante est mise en place en doublant les réseaux optiques.

L'invention peut utiliser un nombre de réseaux optiques variable et adapté aux conditions de mise en œuvre (contraintes physiques, exigences fonctionnelles, performances et débits visés, choix de conception de cabine, etc.). Ainsi un nombre de réseaux optiques optimisé, sans compter les réseaux redondants, peut être appliqué pour un nombre donné de catégories de systèmes, par exemple pour les trois catégories décrites ci-dessus (systèmes audiovisuels, systèmes de communication et systèmes cabine) : un réseau pour une catégorie de systèmes; un réseau commun ou un réseau par catégorie de systèmes pour deux catégories de systèmes données, et un réseau commun, deux réseaux (un réseau commun et un réseau dédié) ou trois réseaux dédiés pour trois catégories de systèmes données. Mais l'invention peut s'appliquer à une partie systèmes constitués de plus de trois catégories.

Par ailleurs, les flux optiques descendants et montants sont soit portées conjointement sur au moins une fibre optique soit séparés et véhiculés sur au moins deux fibres optiques (pour des raisons de redondance, de déploiement supplémentaire, de débit ou de performance, etc.). De plus, les fibres optiques peuvent être monomodes et/ou multi-modes en fonction des performances souhaitées.

En outre, les unités centrales de l'IFE, des systèmes de communication et des systèmes Cabine sont connectés à un même réseau de distribution optique comme illustré par l'architecture 10a de la figure 1, ou sont connectés à différents réseaux optiques, comme illustré par exemple par les architectures 10c à 10f illustrées respectivement aux figures 3 à 6.

De plus, les signaux de base entre le boitier de concentration et configuration et le bloc de ressources de données peuvent être des signaux non électriques, par exemple des signaux directement optiques, ce qui permet de s'affranchir des convertisseurs électriques/optiques, des signaux transmis par voie hertzienne entre des émetteurs et des récepteurs ad hoc, ou tout type de signal convertissable en signal analogique.

Par ailleurs, en cas de coupure d'une fibre, il est possible de faire fonctionner le système de manière partiel en alimentant par le circuit non coupé, soit dans le sens montant soit dans le sens descendant.

## Revendications

1. Procédé de gestion de données dans une cabine de passagers (100) équipée d'une architecture standardisée (10a à 10f) de distribution de flux de données (F1, F2) entre des ressources de données (211 à 213) d'une partie systèmes comportant un système de transmission audiovisuel, des systèmes de communication vers l'extérieur de la cabine (100) et/ou des systèmes cabine, et une partie exploitation de ces données constituée d'équipements de cabine (E1 à E4) destinataires via une conversion de données en signaux optiques distribués sur ces équipements via une interface, la transmission de données pouvant être conduite en sens montant et descendant, **caractérisé en ce que**, les données de chaque ressource étant des signaux électriques, convertissables en signaux analogigues, optiques ou hertziens, consiste à transmettre, dans un sens dit descendant, les données fournies par au moins un système de la partie systèmes à une unique interface de concentration et configuration (11) qui aiguille les données des ressources (211 à 213) selon l'équipement destinataire (E1 à E4), convertit les données non optiques en signaux optiques, puis alloue des longueurs d'onde aux signaux optiques et les distribue par multiplexage et paramétrage des priorités en fonction des équipements destinataires (E1 à E4) et/ou des ressources (211 à 213), et en fonction des équipements pour une ressource donnée, afin de transmettre ces flux multiplexés (F1) de signaux optiques sur une voie (2; 2a, 2'a; 2b) d'au moins un réseau de distribution optique (20 à 22) aux équipements destinataires (E1 à E4) de la partie exploitation via une interface intermédiaire (30, 40) qui gère les longueurs d'onde des signaux optiques et les reconvertit en signaux adaptés aux équipements (E1 à E4) le cas échéant, et **en ce que** la transmission de données est également conduite dans le sens inverse dit montant selon un traitement inversé à chaque interface (30, 40) depuis des équipements (E1 à E4) de la cabine (100) jusqu'aux ressources concernées (210; 211 à 213) via l'interface intermédiaire (30, 40) en fonction de la ressource concernée (211 à 213), le réseau de distribution optique (20 à 22) puis l'interface de concentration et configuration (11) qui transmet ces derniers à la ressource concernée (211 à 213).

2. Procédé de gestion selon la revendication 1, dans lequel l'interface intermédiaire (30, 40) est connectée aux équipements (E3, E4) des systèmes cabine et/ou aux équipements (E2) des systèmes de communication.

3. Procédé de gestion selon l'une quelconque des revendications précédentes, dans lequel l'interface intermédiaire (30, 40) comporte au moins une interface de déconnexion (30) couplée à des interfaces de liaison (40) aux équipements du système audiovisuel (E1) et aux équipements des systèmes de communication (E2) vers l'extérieur situés à proximité des équipements du système audiovisuel (E1), les interfaces de liaison (40) assurant, dans les deux sens, la conversion optique/électrique ainsi que la gestion par allocation des longueurs d'onde et distribution des flux de données (F1, F2).

4. Procédé de gestion selon l'une quelconque des revendications précédentes, dans lequel l'allocation des longueurs d'onde est effectuée en fonction du positionnement des équipements (E1 à E4) dans la cabine (100), des contraintes physiques de la cabine (100) et des caractéristiques fonctionnelles de service liées à un type de flux optique (F1, F2) se rapportant à un niveau de classe et/ou de sécurité.

5. Procédé de gestion selon l'une quelconque des revendications précédentes, dans lequel l'architecture (10a à 10f) est reconfigurée par un traitement numérique appliqué à l'interface de concentration et configuration (11) lors d'installation et/ou de suppression des équipements audiovisuels (E1), de communication (E2, E3), et/ou de commande / contrôle technique (E4) de la cabine (100).

6. Procédé de gestion selon l'une quelconque des revendications précédentes, dans lequel une architecture de redondance intégrant au moins l'interface de concentration et configuration est déployée selon une configuration identique à l'interface de concentration et configuration (11) de l'architecture standardisée (10a à 10f).

7. Procédé de gestion selon l'une quelconque des revendications précédentes, dans lequel le réseau de distribution optique (20 à 22) peut ajouter et/ou séparer des flux optiques (F1, F2) par multiplexage et/ou démultiplexage de longueurs d'onde au sein de ce réseau (20 à 22).

8. Procédé de gestion selon l'une quelconque des revendications précédentes, dans lequel la transmission de données est effectuée dans les sens descendant et montant soit sur la même voie optique (2, 3) soit sur deux voies optiques distinctes (2a, 2'a; 2b).

9. Structure de gestion de données (1a à 1f) embarquée dans un moyen de transport intégrant une cabine (100) équipée de sièges passagers (110), ladite structure comportant un bloc de ressources de données (210) intégrant des unités centrales (211 à 213) de systèmes comportant un système de transmission audiovisuel, des systèmes de communication vers l'extérieur de la cabine (100) et/ou des systèmes cabine, une architecture standardisée de distribution de flux de données (10a à 10f) dans la cabine (100) via des moyens de conversion de données en signaux optiques, et des équipements de cabine (E1 à E4) d'exploitation desdits systèmes, les signaux optiques étant distribués sur ces équipements via une interface, la transmission de données pouvant être conduite en sens montant et descendant, **caractérisée en ce que**, les données de chaque ressource étant des signaux électriques, convertissables en signaux analogiques, optiques ou hertziens, ladite architecture standardisée (10a à 10f) comporte un boitier de concentration et configuration (11) de transfert bidirectionnel, d'une part, de signaux de base avec le bloc de ressources de données (210) et, d'autre part, de signaux optiques avec les équipements (E1 à E4) de la cabine (100) sur au moins une fibre de réseau optique (2, 3; 2a, 2'a; 2b), **en ce que** ce boitier de concentration et configuration (11) intègre des unités de traitement (211 à 213) par commutation des signaux de base, conversion bidirectionnelle des signaux de base en signaux optiques de transfert aux équipements (E1 à E4), et gestion de ces signaux optiques par allocation de longueurs d'onde et distribution de flux optiques descendants (F1) et montants (F2) par paramétrage des priorités en fonction des équipements destinataires (E1 à E4) et/ou des ressources (211 à 213), et en fonction des équipements pour une ressource donnée, et **en ce que** ce boitier de concentration et configuration (11) est relié aux équipements (E1 à E4) desdits systèmes via des boitiers intermédiaires (30, 40) intégrant également au moins certaines des unités de traitement (111 à 113) en fonction des équipements auxquels ils sont reliés.

10. Structure de gestion selon la revendication précédente, dans laquelle les signaux de base entre le boitier de concentration et configuration (11) et le bloc de ressources de données (210) sont choisis entre des signaux électriques, hertziens et optiques.

11. Structure de gestion selon la revendication précédente, dans laquelle les boitiers intermédiaires sont constitués par au moins un boitier de déconnexion (30) intégrant des unités de conversion (111) de signaux optiques/électriques , et/ou de commutation (112) et/ou de gestion par allocation des longueurs d'onde (113) en fonction des équipements (E2 à E4) de systèmes de communication et/ou des systèmes cabine en liaison.

12. Structure de gestion selon la revendication précédente, dans laquelle chaque boitier de déconnexion (30) est relié aux équipements (E1) des systèmes de transmission audiovisuel et à des équipements (E2) des systèmes de communication à proximité des sièges passagers (110) via des boitiers d'interface (40) munis d'unités (112, 113) de conversion optique/électrique et de gestion par allocation des longueurs d'onde.

13. Structure de gestion selon la revendication 9, dans laquelle, les signaux de base étant des signaux électriques, les boitiers intermédiaires sont constitués de boitiers d'interface (40) intégrant des unités (112, 113) de conversion électrique/optique et de gestion par allocation des longueurs d'onde, chaque boitier d'interface (40) étant relié à des équipements (E1, E2) des systèmes de transmission audiovisuel et des systèmes de communication à proximité des sièges passagers (110).

14. Structure de gestion selon la revendication précédente, dans laquelle les sièges (110) sont raccordés au boitier d'interface (40) correspondant par des émetteurs / récepteurs de signaux.

15. Structure de gestion selon l'une quelconque des revendications 13 ou 14, dans laquelle les boitiers d'interface (40) sont reliés, entre eux et à un boitier de déconnexion (30) selon la revendication 12, selon une configuration choisie entre une configuration en chaîne (B2), en bus, en anneau et en étoile, en fonction des contraintes physiques, des exigences fonctionnelles et des choix de conception.

16. Structure de gestion selon la revendication précédente, dans laquelle la distribution des signaux par le boitier de déconnexion (30) aux boitiers d'interface (40) est réalisée par une technique choisie entre des recopies par transfert successif dans le cas d'une configuration en chaîne (B2) et des transmissions sélectives par des séparateurs optiques dans le cas d'une configuration en étoile.

17. Structure de gestion selon l'une quelconque des revendications 13 à 16, dans laquelle chaque boitier d'interface (40) transmet des signaux électriques à plusieurs sièges passagers (110) et comporte une unité de conversion (112) des signaux descendants aux équipements (E1, E2) en signaux électriques et des signaux montants des équipements (E1, E2) en signaux optiques, et une unité de gestion par allocation des longueurs d'onde (113) intégrant un multiplexeur OADM d'injection et de récupération de signaux optiques respectivement dans et depuis au moins une fibre optique (3; 2'a, 2b).

18. Structure de gestion selon la revendication précédente, dans laquelle l'unité de gestion (113) par allocation des longueurs d'onde de chaque boitier d'interface (40) intègre un multiplexeur OADM d'injection et d'extraction de signaux optiques reconfigurable dit ROADM.

19. Structure de gestion selon l'une quelconque des revendications 13 à 18, dans laquelle les allocations de longueurs d'onde sont paramétrées selon une répartition choisie par type de système, par association à chaque boitier de déconnexion (30), par association aux boitiers d'interface (40) reliés à un même boitier de déconnexion (30), par emplacement des équipements (E1, E2) en fonction de leur classe, et/ou par type de flux descendant (F1) et montant (F1) entre les boitiers d'interface (40) et le boitier de concentration et configuration (11).

20. Structure de gestion selon l'une quelconque des revendications 13 à 19, dans laquelle l'attribution des allocations de longueurs d'onde est identique dans les sens montant et descendant des flux de données (F1, F2) entre les boitiers d'interface (40) et le boitier de concentration et configuration (11).

21. Structure de gestion selon l'une quelconque des revendications 13 à 20, dans laquelle les boitiers intermédiaires sont constitués d'au moins un boitier de déconnexion (30) intégrant des unités de commutation (111) et de gestion (113) d'allocation des longueurs d'onde en fonction des équipements (E1 à E4) des systèmes audiovisuels, de communication et/ou des systèmes cabine en liaison, chaque boitier de déconnexion (30) étant couplé directement aux équipements (E3) de systèmes cabine et à des équipements (E4) de systèmes de communication situés dans la cabine (100), et couplé aux équipements (E1) des systèmes de transmission audiovisuel et à des équipements (E2) des systèmes de communication à proximité des sièges passagers (110) via des boitiers d'interface (40) munis d'unités de conversion optique/électrique (112) et de gestion (113) par allocation des longueurs d'onde.

22. Structure de gestion selon l'une quelconque des revendications 13 à 21, dans laquelle dans le cas où l'allocation des longueurs d'onde est indépendante des boitiers d'interface (40), des moyens de contrôle d'accès à ces boitiers (40) sont prévus et choisis parmi un multiplexage en temps partagé ou TDM, un passage de jeton et un échantillonnage synchrone de type polling, afin d'éviter les risques d'interférence.

23. Structure de gestion selon l'une quelconque des revendications 9 à 22, dans laquelle chaque unité de commutation (111) comporte des switchs des données des ressources activés par le boitier de concentration et configuration (11) en fonction des équipements destinataires (E1 à E4).

24. Structure de gestion selon l'une quelconque des revendications 9 à 23, dans laquelle chaque unité de commutation (111) intègre des moyens de gestion des priorités.

25. Structure de gestion selon l'une quelconque des revendications 11 à 24, dans laquelle chaque unité de conversion électrique / optique (112) intègre des émetteurs-récepteurs électro-optiques dits transceivers, ces transceivers sont couplés à des adaptateurs spécifiques de données en fonction des ressources (211 à 213).

26. Structure de gestion selon l'une quelconque des revendications 9 à 25, dans laquelle chaque unité de gestion (113) par allocation des longueurs d'onde et distribution des flux optiques descendants (F1) et montants (F2) comporte un réseau d'attribution par multiplexage choisi entre un multiplexeur WDM de division de longueur d'onde, un multiplexeur DWDM de division dense, un multiplexeur CWDM de division brut et un multiplexeur UDWDM de division ultra-dense.

27. Structure de gestion selon l'une quelconque des revendications 9 à 26, dans laquelle chaque unité de gestion (113) par allocation des longueurs d'onde et distribution des flux optiques montants (F1) et descendants (F2) intègre également des moyens de gestion spécifique des signaux optiques couplés au multiplexeur OTM de division de longueur d'onde et choisis parmi un multiplexeur terminal de longueurs d'onde des signaux optiques, un démultiplexeur OWD de longueur d'onde optique des signaux issus du réseau optique, un multiplexeur OADM d'injection de signaux optiques à une longueur d'onde particulière et d'extraction de signaux optiques sur des longueurs d'onde de réception d'équipement correspondant dit, et/ou un connecteur de longueurs d'onde optique à des ports spécifiques dit OXC.

28. Structure de gestion selon l'une quelconque des revendications 9 à 27, dans laquelle les flux optiques descendants (F1) et montants (F2) sont soit portées conjointement sur au moins une fibre optique (2, 3) soit séparés sur au moins deux fibres optiques (2a, 2'a; 2b), les fibres optiques étant monomodes et/ou multi-modes.

29. Structure de gestion selon l'une quelconque des revendications 9 à 28, dans laquelle la structure de transport est un aéronef et les ressources de données (211 à 213) sont situées dans l'aéronef à proximité de la cabine passagers (100), en particulier dans une baie avionique (200).

## Patentansprüche

1. Verfahren zur Datenverwaltung in einer Passagierkabine (100), die mit einer standardisierten Architektur (10a bis 10f) zur Verteilung von Datenflüssen (F1, F2) zwischen Datenressourcen (211 bis 213) eines Systemabschnitts, der ein audiovisuelles Übertragungssystem, Kommunikationssysteme nach außerhalb der Kabine (100) und/oder Kabinensysteme umfasst, und einem Nutzungsabschnitt dieser Daten, der aus Zielkabinenausrüstungen (E1 bis E4) besteht, ausgerüstet ist, mittels einer Umwandlung von Daten in optische Signale, die über eine Schnittstelle auf diese Ausrüstungen verteilt werden, wobei die Datenübertragung in Aufwärtsrichtung und in Abwärtsrichtung erfolgen kann, **dadurch gekennzeichnet, dass** es, da die Daten jeder Ressource elektrische Signale sind, die in analoge optische oder Funksignale umgewandelt werden können, darin besteht, die von mindestens einem System des Systemabschnitts bereitgestellten Daten in einer sogenannten Abwärtsrichtung an eine einzige Konzentrations- und Konfigurationsschnittstelle (11) zu übertragen, welche die Daten der Ressourcen (211 bis 213) je nach Zielausrüstung (E1 bis E4) leitet, die nicht optischen Daten in optische Signale umwandelt und dann den optischen Signalen Wellenlängen zuteilt und sie durch Multiplexieren und Parametrieren der Prioritäten in Abhängigkeit von den Zielausrüstungen (E1 bis E4) und/oder den Ressourcen (211 bis 213) und in Abhängigkeit von den Ausrüstungen für eine gegebenen Ressource verteilt, um diese gemultiplexten Flüsse (F1) optischer Signale auf einem Weg (2; 2a, 2'a; 2b) mindestens eines optischen Verteilnetzes (20 bis 22) an die Zielausrüstungen (E1 bis E4) des Nutzungsabschnitts zu übertragen, über eine Zwischenschnittstelle (30, 40), die die Wellenlängen der optischen Signale verwaltet und sie ggf. in Signale, die an die Ausrüstungen (E1 bis E4) angepasst sind, zurückwandelt, und dass die Übertragung von Daten ferner auch in der umgekehrten, sogenannten Aufwärtsrichtung gemäß einer an jeder Schnittstelle (30, 40) umgekehrten Verarbeitung erfolgt, von Ausrüstungen (E1 bis E4) der Kabine (100) bis zu den betroffenen Ressourcen (210; 211 bis 213) über die Zwischenschnittstelle (30, 40) in Abhängigkeit von der betroffenen Ressource (211 bis 213), das optische Verteilnetz (20 bis 22) und dann die Konzentrations- und Konfigurationsschnittstelle (11), die letztere an die betroffene Ressource (211 bis 213) überträgt.

2. Verwaltungsverfahren nach Anspruch 1, wobei die Zwischenschnittstelle (30, 40) an die Ausrüstungen (E3, E4) der Kabinensysteme und/oder an die Ausrüstungen (E2) der Kommunikationssysteme angeschlossen ist.

3. Verwaltungsverfahren nach einem der vorhergehenden Ansprüche, wobei die Zwischenschnittstelle (30, 40) mindestens eine Trennschnittstelle (30) umfasst, die mit Verbindungsschnittstellen (40) zu den Ausrüstungen des audiovisuellen Systems (E1) und zu den Ausrüstungen der Kommunikationssysteme (E2) nach außerhalb, die sich in der Nähe der Ausrüstungen des audiovisuellen Systems (E1) befinden, gekoppelt ist, wobei die Verbindungsschnittstellen (40) in beiden Richtungen die opto-elektrische Umwandlung sowie die Verwaltung durch Zuteilung der Wellenlängen und Verteilung der Datenflüsse (F1, F2) sicherstellen.

4. Verwaltungsverfahren nach einem der vorhergehenden Ansprüche, wobei die Zuteilung der Wellenlängen in Abhängigkeit von der Positionierung der Ausrüstungen (E1 bis E4) in der Kabine (100), den physischen Beschränkungen der Kabine (100) und den betrieblichen Diensteigenschaften, die mit einem Typ eines optischen Flusses (F1, F2), der mit einem Klassen- und/oder Sicherheitsniveau zusammenhängt, verknüpft sind, ausgeführt wird.

5. Verwaltungsverfahren nach einem der vorhergehenden Ansprüche, wobei die Architektur (10a bis 10f) durch eine digitale Verarbeitung umkonfiguriert wird, die während des Installierens und/oder Entfernens der audiovisuellen Ausrüstungen (E1), der Kommunikationsausrüstungen (E2, E3) und/oder der technischen Steuer-/Kontrollausrüstungen (E4) der Kabine (100) auf die Konzentrations- und Konfigurationsschnittstelle (11) angewendet wird.

6. Verwaltungsverfahren nach einem der vorhergehenden Ansprüche, wobei eine Redundanzarchitektur, die mindestens die Konzentrations- und Konfigurationsschnittstelle beinhaltet, gemäß einer Konfiguration eingesetzt wird, die mit der Konzentrations- und Konfigurationsschnittstelle (11) der standardisierten Architektur (10a bis 10f) identisch ist.

7. Verwaltungsverfahren nach einem der vorhergehenden Ansprüche, wobei das optische Verteilnetz (20 bis 22) optische Flüsse (F1, F2) durch Multiplexieren und/oder Demultiplexieren von Wellenlängen innerhalb dieses Netzes (20 bis 22) hinzufügen und/oder trennen kann.

8. Verwaltungsverfahren nach einem der vorhergehenden Ansprüche, wobei die Übertragung von Daten in Abwärtsund Aufwärtsrichtung entweder auf demselben optischen Weg (2, 3) oder auf zwei unterschiedlichen optischen Wegen (2a, 2'a; 2b) erfolgt.

9. Struktur zur Datenverwaltung (1a bis 1f), die in einem Transportmittel eingebaut ist, das eine Kabine (100), die mit Passagiersitzen (110) ausgerüstet ist, beinhaltet, wobei die Struktur Folgendes umfasst: einen Datenressourcenblock (210), der Zentraleinheiten (211 bis 213) von Systemen beinhaltet, die ein audiovisuelles Übertragungssystem, Kommunikationssysteme nach außerhalb der Kabine (100) und/oder Kabinensysteme umfassen, eine standardisierte Architektur zur Verteilung von Datenflüssen (10a bis 10f) in der Kabine (100) über Mittel zur Umwandlung von Daten in optische Signale und Kabinenausrüstungen (E1 bis E4) zur Nutzung dieser Systeme, wobei die optischen Signale über eine Schnittstelle auf diese Ausrüstungen verteilt werden, wobei die Übertragung von Daten in Aufwärts- und Abwärtsrichtung erfolgen kann, **dadurch gekennzeichnet, dass**, da die Daten jeder Ressource elektrische Signale sind, die in analoge optische oder Funksignale umgewandelt werden können, die standardisierte Architektur (10a bis 10f) eine Konzentrations- und Konfigurationsbox (11) für einen bidirektionalen Transfer von einerseits Basissignalen mit dem Datenressourcenblock (210) und andererseits optischen Signalen mit den Ausrüstungen (E1 bis E4) der Kabine (100) über mindestens eine Faser eines optischen Netzes (2, 3; 2a, 2'a; 2b) umfasst, dass diese Konzentrations- und Konfigurationsbox (11) Verarbeitungseinheiten (211 bis 213) durch Schalten der Basissignale, durch bidirektionale Umwandlung der Basissignale in optische Signale für den Transfer an die Ausrüstungen (E1 bis E4) und durch Verwaltung dieser optischen Signale durch Zuteilung von Wellenlängen und Verteilung von optischen Flüssen in Abwärtsrichtung (F1) und Aufwärtsrichtung (F2) durch Parametrierung der Prioritäten in Abhängigkeit von den Zielausrüstungen (E1 bis E4) und/oder den Ressourcen (211 bis 213) und in Abhängigkeit von den Ausrüstungen für eine gegebene Ressource beinhaltet, und dass diese Konzentrations- und Konfigurationsbox (11) mit den Ausrüstungen (E1 bis E4) der Systeme über Zwischenboxen (30, 40) verbunden ist, die in Abhängigkeit von den Ausrüstungen, mit denen sie verbunden sind, ebenfalls mindestens gewisse der Verarbeitungseinheiten (111 bis 113) beinhalten.

10. Verwaltungsstruktur nach dem vorhergehenden Anspruch, wobei die Basissignale zwischen der Konzentrations- und Konfigurationsbox (11) und dem Datenressourcenblock (210) aus elektrischen, Funk- und optischen Signalen ausgewählt sind.

11. Verwaltungsstruktur nach dem vorhergehenden Anspruch, wobei die Zwischenboxen aus mindestens einer Trennbox (30) bestehen, die Einheiten zum Umwandeln (111) von optischen/elektrischen Signalen und/oder zum Schalten (112) und/oder zum Verwalten durch Zuteilung der Wellenlängen (113) in Abhängigkeit von den Ausrüstungen (E2 bis E4) von Kommunikationssystemen und/oder der verbundenen Kabinensysteme beinhaltet.

12. Verwaltungsstruktur nach dem vorhergehenden Anspruch, wobei jede Trennbox (30) mit den Ausrüstungen (E1) der audiovisuellen Übertragungssysteme und mit Ausrüstungen (E2) der Kommunikationssysteme in der Nähe der Passagiersitze (110) über Schnittstellenboxen (40) verbunden ist, welche über Einheiten (112, 113) zur optischen/elektrischen Umwandlung und zur Verwaltung durch Zuteilung der Wellenlängen verfügen.

13. Verwaltungsstruktur nach Anspruch 9, wobei, da die Basissignale elektrische Signale sind, die Zwischenboxen aus Schnittstellenboxen (40) bestehen, die Einheiten (112, 113) zur elektrischen/optischen Umwandlung und zur Verwaltung durch Zuteilung der Wellenlängen beinhalten, wobei jede Schnittstellenbox (40) mit Ausrüstungen (E1, E2) der audiovisuellen Übertragungssysteme und der Kommunikationssysteme in der Nähe der Passagiersitze (110) verbunden ist.

14. Verwaltungsstruktur nach dem vorhergehenden Anspruch, wobei die Sitze (110) über Signalsender/-empfänger an die entsprechende Schnittstellenbox (40) angeschlossen sind.

15. Verwaltungsstruktur nach einem der Ansprüche 13 oder 14, wobei die Schnittstellenboxen (40) untereinander und mit einer Trennbox (30) nach Anspruch 12 gemäß einer Konfiguration verbunden sind, die in Abhängigkeit von den physischen Beschränkungen, den betrieblichen Anforderungen und der ausgewählten Auslegung aus einer Ketten(B2)-, einer Bus-, einer Ring- und einer Sternkonfiguration ausgewählt ist.

16. Verwaltungsstruktur nach dem vorhergehenden Anspruch, wobei die Verteilung der Signale durch die Trennbox (30) an die Schnittstellenboxen (40) mittels einer Technik ausgeführt wird, die aus Kopien durch aufeinanderfolgenden Transfer im Fall einer Kettenkonfiguration (B2) und selektiven Übertragungen durch optische Trenneinheiten im Fall einer Sternkonfiguration ausgewählt ist.

17. Verwaltungsstruktur nach einem der Ansprüche 13 bis 16, wobei jede Schnittstellenbox (40) elektrische Signale an mehrere Passagiersitze (110) überträgt und Folgendes umfasst: eine Einheit zum Umwandeln (112) der Signale in Abwärtsrichtung an die Ausrüstungen (E1, E2) in elektrische Signale und der Signale in Aufwärtsrichtung der Ausrüstungen (E1, E2) in optische Signale und eine Einheit zur Verwaltung durch Zuteilung der Wellenlängen (113), die einen OADM-Multiplexer zur Zuführung und Rückgewinnung von optischen Signalen in mindestens eine bzw. aus mindestens einer optischen Faser (3; 2'a, 2b) beinhaltet.

18. Verwaltungsstruktur nach dem vorhergehenden Anspruch, wobei die Einheit zur Verwaltung (113) durch Zuteilung der Wellenlängen jeder Schnittstellenbox (40) einen rekonfigurierbaren OADM-Multiplexer zur Zuführung und Abzweigung von optischen Signalen, der als ROADM bezeichnet wird, beinhaltet.

19. Verwaltungsstruktur nach einem der Ansprüche 13 bis 18, wobei die Zuteilungen von Wellenlängen gemäß einer Aufteilung parametriert werden, die nach Systemtyp, nach Assoziation mit jeder Trennbox (30), nach Assoziation mit den Schnittstellenboxen (40), die mit einer gleichen Trennbox (30) verbunden sind, nach Standort der Ausrüstungen (E1, E2) in Abhängigkeit von ihrer Klasse und/oder nach Typ eines Flusses in Abwärtsrichtung (F1) und Aufwärtsrichtung (F1) zwischen den Schnittstellenboxen (40) und der Konzentrations- und Konfigurationsbox (11) ausgewählt ist.

20. Verwaltungsstruktur nach einem der Ansprüche 13 bis 19, wobei die Zuweisung der Zuteilungen von Wellenlängen in der Aufwärts- und Abwärtsrichtung der Datenflüsse (F1, F2) zwischen den Schnittstellenboxen (40) und der Konzentrations- und Konfigurationsbox (11) identisch ist.

21. Verwaltungsstruktur nach einem der Ansprüche 13 bis 20, wobei die Zwischenboxen aus mindestens einer Trennbox (30) bestehen, die Einheiten zur Umwandlung (111) und zur Verwaltung (113) einer Zuteilung der Wellenlängen in Abhängigkeit von den Ausrüstungen (E1 bis E4) der audiovisuellen Systeme, der Kommunikationssysteme und/oder der verbundenen Kabinensysteme beinhaltet, wobei jede Trennbox (30) mit den Ausrüstungen (E3) von Kabinensystemen und mit Ausrüstungen (E4) von Kommunikationssystemen, die sich in der Kabine (100) befinden, direkt gekoppelt ist und mit den Ausrüstungen (E1) der audiovisuellen Übertragungssysteme und mit Ausrüstungen (E2) der Kommunikationssysteme in der Nähe der Passagiersitze (110) über Schnittstellenboxen (40) gekoppelt ist, welche über Einheiten zur optischen/elektrischen Umwandlung (112) und zur Verwaltung (113) durch Zuteilung der Wellenlängen verfügen.

22. Verwaltungsstruktur nach einem der Ansprüche 13 bis 21, wobei in dem Fall, in dem die Zuteilung der Wellenlängen von den Schnittstellenboxen (40) unabhängig ist, Mittel zur Kontrolle des Zugriffs auf diese Boxen (40) vorgesehen sind und aus einem Zeitmultiplex bzw. TDM, einer Tokenübergabe und einer synchronen Abtastung vom Typ Polling ausgewählt sind, um die Gefahr von Störungen zu vermeiden.

23. Verwaltungsstruktur nach einem der Ansprüche 9 bis 22, wobei jede Umwandlungseinheit (111) Switches der Daten der Ressourcen umfasst, die durch die Konzentrations- und Konfigurationsbox (11) in Abhängigkeit von den Zielausrüstungen (E1 bis E4) aktiviert werden.

24. Verwaltungsstruktur nach einem der Ansprüche 9 bis 23, wobei jede Umwandlungseinheit (111) Mittel zur Verwaltung der Prioritäten beinhaltet.

25. Verwaltungsstruktur nach einem der Ansprüche 11 bis 24, wobei jede elektrische/optische Umwandlungseinheit (112) elektrische/optische Sendeempfänger beinhaltet, die als Transceiver bezeichnet werden, wobei diese Transceiver in Abhängigkeit von den Ressourcen (211 bis 213) mit spezifischen Datenadaptern gekoppelt sind.

26. Verwaltungsstruktur nach einem der Ansprüche 9 bis 25, wobei jede Einheit zur Verwaltung (113) durch Zuteilung der Wellenlängen und Verteilung der optischen Flüsse in Abwärtsrichtung (F1) und Aufwärtsrichtung (F2) ein Netz zur Zuweisung durch Multiplexieren umfasst, das aus einem WDM-Multiplexer mit Wellenlängenteilung, einem DWDM-Multiplexer mit dichter Teilung, einem CWDM-Multiplexer mit grober Teilung und einem UDWDM-Multiplexer mit ultradichter Teilung ausgewählt ist.

27. Verwaltungsstruktur nach einem der Ansprüche 9 bis 26, wobei jede Einheit zur Verwaltung (113) durch Zuteilung der Wellenlängen und Verteilung der optischen Flüsse in Aufwärtsrichtung (F1) und Abwärtsrichtung (F2) ferner Mittel zur spezifischen Verwaltung der optischen Signale beinhaltet, die mit dem OTM-Multiplexer mit Wellenlängenteilung gekoppelt sind und aus einem Terminal-Multiplexer mit Wellenlängen der optischen Signale, einem OWD-Demultiplexer mit optischer Wellenlänge der Signale, die aus dem optischen Netz stammen, einem OADM-Multiplexer zur Zuführung von optischen Signalen mit einer bestimmten Wellenlänge und zur Abzweigung von optischen Signalen auf Empfangswellenlängen einer entsprechenden Ausrüstung und/oder einem Verbinder für optische Wellenlängen mit spezifischen Ports, als OXC bezeichnet, ausgewählt sind.

28. Verwaltungsstruktur nach einem der Ansprüche 9 bis 27, wobei die optischen Flüsse in Abwärtsrichtung (F1) und Aufwärtsrichtung (F2) entweder gemeinsam auf mindestens einer optischen Faser (2, 3) getragen werden oder auf mindestens zwei optische Fasern (2a, 2'a; 2b) verteilt sind, wobei die optischen Fasern monomodal und/oder multimodal sind.

29. Verwaltungsstruktur nach einem der Ansprüche 9 bis 28, wobei die Transportstruktur ein Flugzeug ist und sich die Datenressourcen (211 bis 213) in dem Flugzeug in der Nähe der Passagierkabine (100), insbesondere in einem Avionikraum (200), befinden.

## Claims

1. A method for managing data in a passenger cabin (100) equipped with a standardized architecture (10a to 10f) for distributing data streams (F1, F2) between data resources (211 to 213) of a systems part comprising an audiovisual transmission system, systems for outward communication from the cabin (100) and/or cabin systems, and a part for utilization of these data consisting on cabin devices (E1 to E4) recipient via a conversion of data into optical signals, distributed to these devices via an interface, the transmission of data can be conducted in both upstream and downstream directions **characterized in that**, the data of each resource being electrical signals, conversion into analog, optical or hertzian signals, it consists in transmitting, in a so-called downgoing direction, the data supplied by at least one system of the systems part to a single concentration and configuration interface (11) which steers the data of the resources (211 to 213) according to the recipient device (E1 to E4), converts the non-optical data into optical signals, and then allocates wavelengths to the optical signals and distributes them by multiplexing and parametrization of priorities as a function of the recipient devices (E1 to E4) and/or resources (211 to 213) as a function of the devices for a given resource, so as to transmit these multiplexed streams (F1) of optical signals on a pathway (2; 2a, 2'a; 2b) of at least one optical distribution network (20 to 22) to the recipient devices (E1 to E4) of the utilization part via an intermediate interface (30, 40) which manages the wavelengths of the optical signals and reconverts them into signals suited to the devices (E1 to E4) if relevant, and **in that** the transmission of data is also undertaken in the reverse so-called upgoing direction according to a processing reversed at each interface (30, 40) from devices (E1 to E4) of the cabin (100) to the resources concerned (210; 211 to 213) via the intermediate interface (30, 40) as a function of the resource concerned (211 to 213), the optical distribution network (20 to 22) and then the concentration and configuration interface (11) which transmits them to the resource concerned (211 to 213).

2. The management method as claimed in claim 1, in which the intermediate interface (30, 40) is connected to the devices (E3, E4) of the cabin systems and/or to the devices (E2) of the communication systems.

3. The management method as claimed in either one of the preceding claims, in which the intermediate interface (30, 40) comprises at least one disconnection interface (30) coupled to linking interfaces (40) for linking to the devices of the audiovisual system (E1) and to the devices of the systems for outward communication (E2) situated in proximity to the devices of the audiovisual system (E1), the linking interfaces (40) ensuring, in both directions, optical/electrical conversion as well as management by allocation of wavelengths and distribution of data streams (F1, F2).

4. The management method as claimed in any one of the preceding claims, in which the allocation of the wavelengths is performed as a function of the positioning of the devices (E1 to E4) in the cabin (100), of the physical constraints of the cabin (100) and of the functional service characteristics related to a type of optical stream (F1, F2) pertaining to a level of class and/or of security.

5. The management method as claimed in any one of the preceding claims, in which the architecture (10a to 10f) is reconfigured by a digital processing applied to the concentration and configuration interface (11) during installation and/or removal of the audiovisual devices (E1), communication devices (E2, E3), and/or devices for technical command / control (E4) of the cabin (100).

6. The management method as claimed in any one of the preceding claims, in which a redundancy architecture incorporating at least the concentration and configuration interface is deployed according to a configuration identical to the concentration and configuration interface (11) of the standardized architecture (10a to 10f).

7. The management method as claimed in any one of the preceding claims, in which the optical distribution network (20 to 22) can add and/or separate optical streams (F1, F2) by multiplexing and/or demultiplexing of wavelengths within this network (20 to 22).

8. The management method as claimed in any one of the preceding claims, in which the transmission of data is performed in the downgoing and upgoing directions either on the same optical pathway (2, 3) or on two distinct optical pathways (2a, 2'a; 2b).

9. A data management structure (1a to 1f) embedded on board a transport means incorporating a cabin (100) equipped with passenger seats (110), said structure comprising a data resources block (210) incorporating central units (211 to 213) of systems comprising an audiovisual transmission system, systems for outward communication from the cabin (100) and/or cabin systems, a standardized architecture for distributing data streams (10a to 10f) in the cabin (100) via means for converting data into optical signals, and cabin devices (E1 to E4) for utilization of said systems, the optical signals being distributed on these equipments via an interface, the data transmission being able to be carried out in upward and downward direction, **characterized in that** the data of each resource being electrical signals, convertible into analog, optical or radio signals, said standardized architecture (10a to 10f) comprises a concentration and configuration box (11) for bidirectional transfer, on the one hand, of base signals with the data resources block (210) and, on the other hand, of optical signals with the devices (E1 to E4) of the cabin (100) on at least one optical network fiber (2, 3; 2a, 2'a; 2b), **in that** this concentration and configuration box (11) incorporates units (211 to 213) for processing by switching of the base signals, bidirectional conversion of the base signals into optical signals for transfer to the devices (E1 to E4), and management of these optical signals by allocation of wavelengths and distribution of downgoing (F1) and upgoing (F2) optical streams by parametrization of priorities as a function of the recipient devices (E1 to E4) and/or resources (211 to 213) as a function of the devices for a given resource, and **in that** this concentration and configuration box (11) is linked to the devices (E1 to E4) of said systems via intermediate boxes (30, 40) also incorporating at least some of the processing units (111 to 113) as a function of the devices to which they are linked.

10. The management structure as claimed in the preceding claim, in which the base signals between the concentration and configuration box (11) and the data resources block (210) are chosen from between electrical, RF and optical signals.

11. The management structure as claimed in the preceding claim, in which the intermediate boxes consist of at least one disconnection box (30) incorporating units (111) for processing optical/electrical signals, and/or for switching (112) and/or for management by allocation of wavelengths (113) as a function of the devices (E2 to E4) of communication systems and/or cabin systems in conjunction.

12. The management structure as claimed in the preceding claim, in which each disconnection box (30) is linked to the devices (E1) of the audiovisual transmission systems and to devices (E2) of the communication systems in proximity to the passenger seats (110) via interface boxes (40) furnished with units (112, 113) for optical/electrical conversion and for management by allocation of wavelengths.

13. The management structure as claimed in claim 9, in which, the base signals being electrical signals, the intermediate boxes consist of interface boxes (40) incorporating units (112, 113) for electrical/optical conversion and for management by allocation of wavelengths, each interface box (40) being linked to devices (E1, E2) of the audiovisual transmission systems and communication systems in proximity to the passenger seats (110).

14. The management structure as claimed in the preceding claim, in which the seats (110) are hooked up to the corresponding interface box (40) by signals emitters / receivers.

15. The management structure as claimed in either one of claims 13 and 14, in which the interface boxes (40) are linked, to one another and to a disconnection box (30) as claimed in claim 12, according to a configuration chosen from between a chain configuration (B2), bus configuration, ring configuration and star configuration, as a function of the physical constraints, of the functional requirements and of the design choices.

16. The management structure as claimed in the preceding claim, in which the distributing of the signals by the disconnection box (30) to the interface boxes (40) is carried out by a technique chosen from between copyovers by successive transfer in the case of a chain configuration (B2) and selective transmissions by optical separators in the case of a star configuration.

17. The management structure as claimed in any one of claims 13 to 16, in which each interface box (40) transmits electrical signals to several passenger seats (110) and comprises a unit (112) for converting the downgoing signals to the devices (E1, E2) into electrical signals and the upgoing signals from the devices (E1, E2) into optical signals, and a unit for management by allocation of wavelengths (113) incorporating an OADM multiplexer for injecting and recovering optical signals respectively into and from at least one optical fiber (3; 2'a, 2b).

18. The management structure as claimed in the preceding claim, in which the unit (113) for management by allocation of wavelengths of each interface box (40) incorporates a so-called ROADM reconfigurable OADM multiplexer for injecting and extracting optical signals.

19. The management structure as claimed in any one of claims 13 to 18, in which the wavelength allocations are parametrized according to a distribution chosen by type of system, by association with each disconnection box (30), by association with the interface boxes (40) linked to one and the same disconnection box (30), by location of the devices (E1, E2) as a function of their class, and/or by type of downgoing (F1) and upgoing stream (F2) between the interface boxes (40) and the concentration and configuration box (11).

20. The management structure as claimed in any one of claims 13 to 19, in which the allotting of the wavelength allocations is identical in the upgoing and downgoing directions of the data streams (F1, F2) between the interface boxes (40) and the concentration and configuration box (11).

21. The management structure as claimed in any one of claims 13 to 20, in which the intermediate boxes consist of at least one disconnection box (30) incorporating units for switching (111) and for managing (113) allocation of the wavelengths as a function of the devices (E1 to E4) of the audiovisual systems, communication systems and/or cabin systems in conjunction, each disconnection box (30) being coupled directly to the devices (E3) of cabin systems and to devices (E4) of communication systems situated in the cabin (100), and coupled to the devices (E1) of the audiovisual transmission systems and to devices (E2) of the communication systems in proximity to the passenger seats (110) via interface boxes (40) furnished with units for optical/electrical conversion (112) and for management (113) by allocation of wavelengths.

22. The management structure as claimed in any one of claims 13 to 21, in which, in the case where the allocation of the wavelengths is independent of the interface boxes (40), means for controlling access to these boxes (40) are provided and chosen from among time division multiplexing or TDM, token passing and synchronous sampling of polling type, so as to avoid the risks of interference.

23. The management structure as claimed in any one of claims 9 to 22, in which each switching unit (111) comprises resources data switches activated by the concentration and configuration box (11) as a function of the recipient devices (E1 to E4).

24. The management structure as claimed in any one of claims 9 to 23, in which each switching unit (111) incorporates means for managing priorities.

25. The management structure as claimed in any one of claims 11 to 24, in which each electrical / optical conversion unit (112) incorporates electro-optical emitters-receivers termed transceivers, these transceivers are coupled to specific adaptors of data as a function of the resources (211 to 213).

26. The management structure as claimed in any one of claims 9 to 25, in which each unit (113) for management by allocation of wavelengths and distribution of the downgoing (F1) and upgoing (F2) optical streams comprises a network for allotting by multiplexing chosen from between a wavelength division multiplexer WDM, a dense division multiplexer DWDM, a coarse division multiplexer CWDM and an ultra-dense division multiplexer UDWDM.

27. The management structure as claimed in any one of claims 9 to 26, in which each unit (113) for management by allocation of wavelengths and distribution of the upgoing (F1) and downgoing (F2) optical streams also incorporates means for specific management of the optical signals coupled to the wavelength division multiplexer OTM and chosen from among a terminal multiplexer of wavelengths of the optical signals, an optical wavelength demultiplexer OWD of the signals arising from the optical network, an OADM multiplexer for injecting optical signals at a particular wavelength and for extracting optical signals on corresponding-device reception wavelengths termed, and/or an optical connector of wavelengths to specific ports, termed OXC.

28. The management structure as claimed in any one of claims 9 to 27, in which the downgoing (F1) and upgoing (F2) optical streams are either carried jointly on at least one optical fiber (2, 3) or separated on at least two optical fibers (2a, 2'a; 2b), the optical fibers being single-mode and/or multimode.

29. The management structure as claimed in any one of claims 9 to 28, in which the transport structure is an aircraft and the data resources (211 to 213) are situated in the aircraft in proximity to the passenger cabin (100), in particular in an avionics bay (200).
